Europäisches Patentamt

European Patent Office

Office européen des brevets

(19)

(11) Publication number: **0 515 709 A1**

## EUROPEAN PATENT APPLICATION

(12)

(21) Application number: **91108575.1**

(22) Date of filing: **27.05.91**

(51) Int. Cl.⁵ **G10L 5/04**

(43) Date of publication of application:
**02.12.92 Bulletin 92/49**

(84) Designated Contracting States:
**DE FR GB IT**

(71) Applicant: **International Business Machines Corporation**
**Old Orchard Road**
**Armonk, N.Y. 10504(US)**
(84) **DE FR GB**

(71) Applicant: **IBM SEMEA S.r.l.**
**Via Fara, 35, P.O. Box 137**
**I-20124 Milan(IT)**
(84) **IT**

(72) Inventor: **Giustiniani, Massimo**
**Via Carlo Fadda 19**
**I-00173 Rome(IT)**
Inventor: **Pierucci, Piero**
**Via P. Mengoli 14**
**I-00146 Rome(IT)**

(74) Representative: **Arrabito, Michelangelo**
**IBM Semea S.r.l. Direzione Brevetti**
**MI-FEL-790 P.O. Box 137**
**I-20090 Segrate (Milano)(IT)**

(54) **Method and apparatus for segmental unit representation in text-to-speech synthesis.**

(57) A method and an apparatus using such a method for compactly representing a large set of acoustic units for concatenative text-to-speech synthesis. The method uses a spectral coding based on an Acoustic Ergodic Hidden Markov Model (AEHMM). The method includes the steps of:
a) building the AEHMM,
b) initialising the AEHMM by a Vector Quantization clustering scheme, having the same size of the AEHMM,
c) training the AEHMM by the forward-backward algorithm and Baum Welch re-estimation formulas,
d) building a set of segmental units to be used for speech synthesis,
e) coding the segmental units using the labelling feature of the AEHMM and
f) decoding the set of the segmental units to be concatenated for the speech synthesis process by an AEHMM decoder.

EP 0 515 709 A1

FIG. 1

The present invention relates generally to the field of authomatic text-to-speech synthesis and specially to a method for compactly representing a large set of acoustic units for a concatenative text-to-speech synthesis system and an apparatus for speech synthesis employing such a method.

One approach to speech synthesis from unrestricted written text involves the use of pre-stored segmental units to be concatenated. The use of pre-stored segmental units in text-to-speech synthesis has been described in various articles such as "Automatic Speech Synthesis", by D. O'Shaughnessy, in IEEE Communications Magazine, pp. 26-34, Dec. 1983 and the article "A text-to-speech system for Italian", by R. Delmonte et al., in Proceedings of ICASSP, San Diego, Cal., Apr. 1984.

In performing text-to-speech synthesis based on concatenation of pre-stored segmental units, the input text is initially processed in order to transform it in a sequence of phonetic symbols that are more suitable for speech synthesis purposes.

In accordance with the phonetic symbol sequence produced during the text processing step, a corresponding sequence of segmental units to be concatenated is produced. The sequence of segmental unit parameters is then retrieved to prepare the input sequence for the speech synthesizer. Depending on the segmental unit representation, a proper transformation is generally operated in order to obtain a suitable set of coefficients for the speech synthesizer. Then the speech synthesizer is activated for each segmental unit, producing the synthetic speech signal.

The kind and size of each segmental unit should be carefully chosen accounting for the desired synthetic speech quality and for memory occupancy of the resulting segmental unit set. Generally a segmental unit as large as a syllable or more can be used if a high quality synthetic speech is requested, but this requires a very large memory because of the very large number of possible syllables in a language. A decrease of the size of the segmental units generally results in a lower synthetic speech quality, because a number of coarticulation phenomena occurring in natural speech are not represented. In this case the memory requirements are much less than those of the previous case. The use of phoneme-sized segmental units allows a large memory occupancy saving, but the resulting quality of synthetic speech is very poor. A reasonable trade-off between synthetic speech quality and memory occupancy is usually obtained with diphonic segmental units, i.e. units that represent the coarticulation phenomena occurring between two phonetic units. It is assumed that in natural speech the occurrence of a phonetic event is influenced only by the previous and/or following phonemes, thus allowing the representation of coarticulation effects with units extending only to couples of phonemes. The first disclosure of the diphonic unit as a proper unit for the speech synthesis process is found in "Terminal Analog Synthesis of Continuous Speech using the Diphone Method of Segment Assembly", by N. R. Dixon, H. D. Maxey, in IEEE Transactions on Audio and Electroacustics, N.16, p. 40, 1968, and a number of speech synthesis systems have been developed using this technique. The trade-off between the number of segmental units and memory occupancy does not make this technique suitable for the development of high-quality low-cost speech synthesis systems.

The number N of diphone units varies with the language to be synthesized in the order of one thousand units up to three thousand units. In order to prevent a large memory occupancy of the diphone unit set a number of coding techniques are adopted, mainly based on a spectral representation of speech. For each segmental unit in the set $U \equiv (u_n)$, $1 \leq n \leq N$, the speech signal is broken into successive intervals $u_{n,l}$, $1 \leq l \leq l_n$, ($l_n$ = number of segments in segmental unit $u_n$), typically frames of 20 ms length. For each interval $u_{n,l}$ the speech signal is examined by an acoustic processor with respect to the main psyco-acoustic characteristics of the human perception of speech. Each interval is then represented by P coefficients $a_{n,l,p}$, $1 \leq p \leq P$ (usually $10 \leq P \leq 16$), suitable for the synthesis purpose. The main approach relies on Linear Predictive Coding (LPC) of speech, because other approaches used in different fields of speech processing are not suitable for a direct use in speech synthesis. The speech signal is then synthesized utilising the stored spectral representation to model phone-to-phone transitions, while steady state phone sections are obtained interpolating spectra between the end of a transition and the beginning of the next. For the Italian language, as well as for many other languages, some phonetic units do not show a well recognisable steady state (for instance 'r' in the whole of its occurrences, or 'l', or the demi-vowel 'i' in the Italian word 'aiuto'). Better perceptual results for this class of phonemes are obtained considering the whole phoneme as a transition; instead of a diphone, it is necessary to deal with three phoneme units, usually named 'triphones'. Of course considering three phoneme segmentations instead of diphones results in a higher segmental unit set memory occupancy, due both to longer transitions and to a larger number of stored units.

A memory occupancy computation for a traditional segmental synthesis scheme follows. Let us assume that the segmental unit set is composed of $N_d$ = 600 diphonic units, each with an average length $l^{av}_d$ = 10 of 10 frames, and of $N_t$ = 300 triphonic units, each with an average length of $l^{av}_t$ = 20. Using LPC coding with a reasonable number of coefficients P = 14, and representing each coefficient by a 2-byte floating point representation, the memory occupancy is $(N_d * l^{av}_d + N_t * l^{av}_t) * P * 2 = 336,000$ bytes. This value is very high especially for real time applications where the available memory size is often very limited. Two possible solutions for the 2-byte floating point representation of each LPC coefficient are either the use of different coding schemes, or a reduction of the number of segmental units.

The main drawback of the first solution, i.e. different coding schemes, is a considerable lowering of the synthetic speech quality, mainly due to the local properties of the adopted coders. The drawback of the second solution is a reduction of the synthetic speech quality due to a poorer representation of coarticulation phenomena.

The invention as claimed is intended to remedy the above drawbacks. It solves the problem of compactly representing the segmental unit set by the use of a spectral coding method based on Hidden Markov Model (HMM) techniques.

The main advantage of the invention is that it drastically reduces the memory occupancy and allows a large set of diphones and triphones to be stored in a memory space smaller than that necessary to represent the same set of only diphones using prior art techniques. According to the present invention the same amount of memory can be used to store a larger set of segmental units, resulting in a better representation of coarticulation phenomena present in natural speech. Another advantage is that the use of HMM techniques in the synthetic speech reconstruction process allows the smoothing of spectral trajectories at the borders of linked segmental units, using a detailed model of the vocal apparatus dynamics.

The present invention achieves the aim of compactly representing segmental units by using

(a) data determined for the construction of a prior art segmental unit set and

(b) a model of the vocal apparatus that accounts for spectral steady states and dynamics, allowing straightforward coding and reconstruction schemes with very low memory occupancy.

First, using the speech signal provided by a reference speaker, the set U of segmental units is determined using traditional approaches based on semiautomatic segmentation techniques as described in the article entitled "A Database for Diphone Units Extraction", by G. Ferri et al., in Proceedings of ESCA ETRW on Speech Synthesis, Autrans, France, Sep. 1990. Then, using the same speech material, an Acoustic Ergodic Hidden Markov Model (AEHMM) is trained in order to obtain the model of the spectral dynamics of the language.

For each segmental unit $u_k$ of the set U, a suitable parametric representation is calculated, obtaining the sequence $P_{n,l}$, $1 \leq n \leq N$, $1 \leq l \leq l_k$ . Then the most probable sequence of states $q_{n,1}$ of the AEHMM coder is calculated using the sequence $P_{n,1}$ as input and the Viterbi algorithm. The process is repeated for each segmental unit $u_k$ in the set U.

At synthesis time the proper segmental units are selected and linked together, providing a string of states $q_{n,l} + q_{w,l} + ...$ Finally this state sequence is used as input to the AEHMM decoding stage, thus producing the proper sequence of LPC parameters that is sent to the speech synthesizer.

The memory occupancy computation for the spectral coding method of the invention follows. The computation is carried out again for the previous segmental unit set (600 diphonic units, with an average length $l^{av}_d$ of 10 frames, and 300 triphonic units, with an average length $l^{av}_t$ of 20 frames) and assuming that the number of states of the AEHMM is M = 256, a reasonable value to achieve a good speech quality. First the whole AEHMM codebook is to be represented in order to easily compare the results; it is assumed that the codebook is computed with an order p = 14, and a 2-byte floating point representation for each coefficient : $M * P * 2$ = 7,160 bytes. To represent the segmental unit set it is observed that for each frame there is the need of 1 byte, i.e. the size of a label of the AEHMM model, resulting in an occupancy of $N_d*l^{av}_d + N_t*l^{av}_t$ = 12,000 bytes. The whole memory occupancy is thus 7,168 + 12,000 = 19,168 bytes, i.e. a saving of more than 94% of memory space with respect to the previous memory occupancy computation, without significant degradation of the synthetic speech quality. Following this approach it is possible to increase the prediction order, and consequently speech synthesis quality, affecting only the codebook size, and not the transitions representation size. For the same reason it is no more necessary to undergo the burden of variable length, fixed point parameter coding generally used in small memory real time synthesizers. The same occupancy, and even lower, can be obtained using a more precise reliable floating point coding, since the number of floating point coefficients to be stored is determined by the codebook size and not by the number of transitions used. The codebook size is not critical. In fact, experimental results indicate that an M = 256 state codebook is enough to obtain good speech synthesis quality in most of the cases; sizes greater than 256 are not necessary, since the resulting quantised speech is not subjectively distinguishable from the continuous parameter representation.

FIG. 1 shows a block diagram of a text-to-speech synthesizer apparatus using the invention.

FIG. 2 shows a possible set of phonetic units for the Italian language.

FIG. 3 reports a sample input text.

FIG. 4 illustrates the sample input text divided into syllables.

FIG. 5 illustrates the sample input text phonetically transcribed.

FIG. 6 illustrates the sample input text with structured phonetic transcription.

FIG. 7 illustrates the part of speech (POS) classification of words in the sample input text.

FIG. 8 illustrates a sample of the output of a segmental unit processor.

FIG. 9 shows a first implementation of a segmental unit linker.

FIG. 10 shows another implementation of the segmental unit linker.

FIG. 11 shows a lattice synthesis filter used in the text-to-speech synthesizer apparatus of FIG. 1.

GENERATION OF THE SEGMENTAL UNIT SET

The generation of the segmental unit set is usually made by a phonetic expert. A set of natural carrier utterances are chosen and recorded in quiet conditions, in order to represent all significant sound co-occurrences in the given language. The acoustic signal is then converted into digital format using analog to digital conversion techniques. Then segmental units are extracted from the carrier utterances generally by visual inspection of spectral representations, locating by a manual procedure the segmental unit borders. Generally the segmental unit borders are located in the spectral steady-state regions of adjacent phonetic events, as described in the article entitled "A Systematic Approach to the Extraction of Diphone Elements from Natural Speech", by H. Kaeslin, in IEEE Transactions ASSP-34, N.2, Apr. 1986. Finally a copy of each segmental unit $U_n$, $1 \leq n \leq N$, is produced using some editing feature, and is stored in a suitable sampled data format in order to be easily retrieved.

In this phase another data set is prepared for the synthesis process : the Amplitude and Duration Database. This contains, for each phoneme in the language, the average duration and amplitude given the position in the syllable, taken from natural speech data. Details on this procedure can be found in the article entitled "Automatic Inference of a Syllabic Prosodic Model", by A. Falaschi, M. Giustiniani, P. Pierucci in Proceedings of ESCA ETRW on Speech Synthesis, Autrans, France, Sep.1990.

CODING OF THE SEGMENTAL UNIT SET

The speech signal contains information about the vocal tract behaviour, i.e. the configuration of the vocal apparatus, and the source signal, produced from vocal cords and/or constrictions in the vocal apparatus. In text-to-speech applications the contribution of source signal is often discarded from the representation of the segmental units, because it can be easily reconstructed during the synthesis phase from supra-segmental characteristics. The next step in building the segmental unit set is then the coding of the sampled data files using a suitable representation. Possible candidates are Discrete Fourier Transform, Formant Tracks and Linear Predictive Coding (LPC). The last one is the most used for text-to-speech synthesis using segmental unit concatenation mainly because LPC allows an automatic determination of the vocal tract representation. A number of relationships was demonstrated between LPC coefficients and other coefficients used during the interpolation stage (Log Area Ratios) and coefficients used in the synthesis process (Reflection Coefficients). The determination of the LPC representation of the segmental unit set is straightforward. For each segmental unit $u_n$ in the set U, the sampled data signal is divided in small frames $U_{n,l}$ having duration of about 20 ms. For each segment the autocorrelation of the signal is calculated and Levinson Recursion is applied in order to obtain a set of P coefficients $a_{n,l,p}$, representative of the vocal tract behaviour. The number P is related to the accuracy of the representation, and a value of P = 14 is adequate to represent the speech signal characteristics. As an example, the resulting set $a_{n,l,p}$, $1 \leq l \leq l_n$, $1 \leq p \leq P$ of LPC coefficients, with $l_n = 10$, is obtained for a segmental unit $u_n$ with a length of 80 ms and a frame spacing of 8 ms.

AEHMM DEFINITION

In order to obtain a spectral coding of the segmental unit set based on HMM, the invention teaches the use of a continuous spectral densities Ergodic Hidden Markov Model (from here on AEHMM, Acoustic Ergodic Hidden Markov Model). A full description of this particular kind of Markov model can be found in the European patent application N.90119789.7 entitled "A Phonetic Hidden Markov Model Speech Synthesizer". Briefly, associated to each of M states of the AEHMM is a continuous observation probability distribution giving the probability to observe a frame of speech, and a transition probability giving the probability to pass from a state at time t-1 to every other state at time t, given an input sequence of parametric observations extracted from speech data. The observation probability functions, one for each of M states, is representative of local spectral characteristics of the speech signal, i.e. they represent a basic alphabet of sounds for the given language. The transition probabilities, M for each of M states, represent the rules governing the speech signal spectral dynamics, i.e. the constraints that are present in the speech production mechanism. Hence the AEHMM model is described by :

$$\Omega_{AEHMM} \equiv \{M, Q, \Pi, A, F\}$$

where M is the size of the model, i.e. the number of model's states, Q is the set of states, is the initial probability vector, A is the state transition matrix and F is a set of observation probability functions.

Given the set of M states $Q \equiv (q_i)$, the global model is completely defined by a set of initial probability values

$$\Pi \equiv \{\pi_i = Prob(q_i^{t=0})\}, 1 \leq i \leq M$$

representing the absolute probability of state $q_i$ at time $t = 0$, and a stochastic transition matrix

$$A \equiv \{\alpha_{i,j} = Prob(q_j^t / q_i^{t-1})\}, 1 \leq i, j \leq M$$

which accounts for the inter-state transition rules, giving the probability of entering state j at time t, conditioned on the previous state i at time t-1.

A Hidden Markov Model represents two stochastic processes, one that is observable and one that is hidden. In the AEHMM, the observed process is the sequence of features extracted from speech, while the underlying hidden process is the sequence of local sources that most probably have generated the observed speech. This means that the AEHMM associates the features, computed from each speech signal frame, to the state, or set of states, and therefore the corresponding signal sources, that most probably has emitted that signal frame feature. Each source maybe represented by a progressive number, named label, where the number of labels is equal to the size of the AEHMM. The final result is that the AEHMM associates to each frame the label, or labels, of each of the sources that most probably has emitted the frame. This action will be referred to as acoustic labelling.

No matter what kind of features representation is used, as far as they are useful to represent the spectrum of the signal, the basic point in the use of the AEHMM in the present invention is that of generating for a speech utterance, the sequence of sources, and hence of labels, that most probably have generated the observed speech utterance, where the probability is computed on the whole utterance and not only locally, as it is using standard vector quantizers. This means that the source identification is not made locally, but considering the whole evolution of the utterance, and accounting for phonotactical constrains embodied in the transition matrix.

## AEHMM PARAMETERS ESTIMATION

In order to build the model, some kind of distance or distortion measure is to be used; in the present embodiment, Likelihood Ratio distortion measure has been preferred, but other kind of measures may be used as well. The AEHMM is initialised by any standard clustering algorithm applied to the same parametric representation of speech used in the AEHMM. In order to reduce the computational requirements of the re-estimation procedure, the model is preferably initialised by a Vector Quantization clustering scheme (VQ in the following), having the same size of the AEHMM, and applied to the same set of speech utterances used in the following for the AEHMM model re-estimation procedure, as described in the articles entitled "Design and Performance of Trellis Vector Quantizers for Speech Signals" by B. H. Juang, IEEE Transactions ASSP-36, N.9, Sep.1989, and "Speech coding based upon Vector Ouantization", by A.Buzo, A. H. Gray Jr., R. M. Gray, J. D. Markel, in IEEE Transactions ASSP-28, pp. 562-574, Oct. 1980. Initial estimates for the state observation densities can be directly obtained from the feature vectors of the Vector Quantizer codebook centroids, while the variance in the proposed features representation is the normalised LPC residual energy. Initial estimates of the state transition probability matrix can be obtained, using the set of VQ quantized speech utterances, by the number of occurrences of VQ label $l_i$ and VQ label $l_i$ in sequence, divided by the total number of observed couples starting with VQ label $l_i$, i.e.

$$A^\theta \equiv \{a^\theta_{i,j} = \frac{Coc(l_i^{t-1}, l_j^t)}{\sum_{t=1}^{T} \sum_{j=1}^{M} Coc(l_i^{t-1}, l_j^t)}$$

$$1 \leq i,j \leq M$$

where $Coc(l_i^{t-1}, l_j^t)$ is the co-occurrence of VQ label $l_i$ at time t-1 followed by VQ label $l_j$ at time t in the training data. Initial estimates of initial probability vector can be computed in the same way as the number of occurrences of VQ label $l_i$ divided by the total number of observed labels, that is

$$\Pi^\theta \equiv \{\pi_i^\theta = \frac{Cnt(l_i)}{\sum_{i=1}^{M} Cnt(l_i)}\}$$

where $Cnt(l_i)$ is the number of occurrences of VQ label $l_i$ in the training data. Training is then performed on a speech corpus by usual forward-backward recursion and Baum Welch re-estimation formulas. In order to reduce the training data size requirements and to improve the overall estimation procedure, it is preferred that all speech data be uttered by the same speaker. Moreover it is preferred that the utterances be phonetically balanced, that means they should be representative of all the phonetic events typical of the language.

## AEHMM CODING OF SEGMENTAL UNIT SET

The coding algorithm makes use of the well known Viterbi algorithm, to associate each speech frame sequence to the label state sequence that most probably has emitted the observation, that is the frame sequence itself. In the proposed implementation, the speech spectrum is represented by the first P lags of the autocorrelation function $r_p$, $1 \leq p \leq P$, and by the Linear Prediction Gain $\sigma$ . This means that the speech is modelled as an Autoregressive Process of order P.

For each segmental unit $u_n$, the signal is divided into slices $u_{n,l}$ of the same length, named frames; the auto-correlation function and LPC are computed for each frame, obtaining the sequence $r_{n,l,p}$, $_{n,l}$, $1 \leq n \leq N$, $1 \leq l \leq l_n$. Then the most probable sequence of states $q_{n,l}$ of the AEHMM coder is calculated using the sequence $r_{n,l,p}$, $\sigma_{n,l}$ as input and the Viterbi algorithm. A suitable value for P, number of autocorrelation lags, is 14, but other values can be used as well. For each segmental unit the Viterbi algorithm is activated, obtaining the corresponding acoustic label sequence. The segmental unit representation in terms of AEHMM labels is stored in the reference set. The process is repeated until all the segmental units of the set are considered.

## DESCRIPTION OF THE SYNTHESIS SYSTEM

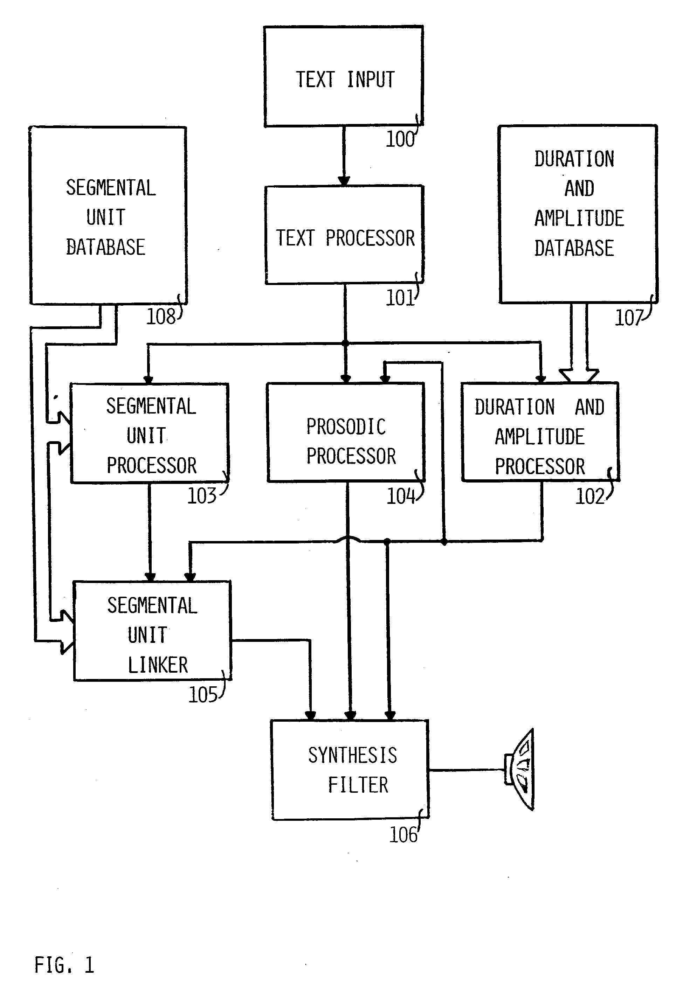

FIG.1 shows the block diagram of a text-to-speech synthesizer using the invention. In the figures only the structures that are subject of the invention are fully described, while the components necessary for the speech synthesis, known in the prior art, are only briefly described. The text-to-speech synthesizer of FIG.1 includes a Text Input module 100, a Text Processor 101, a Duration and Amplitude Processor 102, a Segmental Unit Processor 103, a Prosodic Processor 104, a Segmental Unit Linker 105, and a Synthesis Filter 106. The blocks labelled as 107, 108 are the Duration and Amplitude Database and the Segmental Unit Database respectively, built according to the teachings of the previous sections "Generation of the Segmental Unit Set" and "AEHMM Coding of Segmental Unit Set".

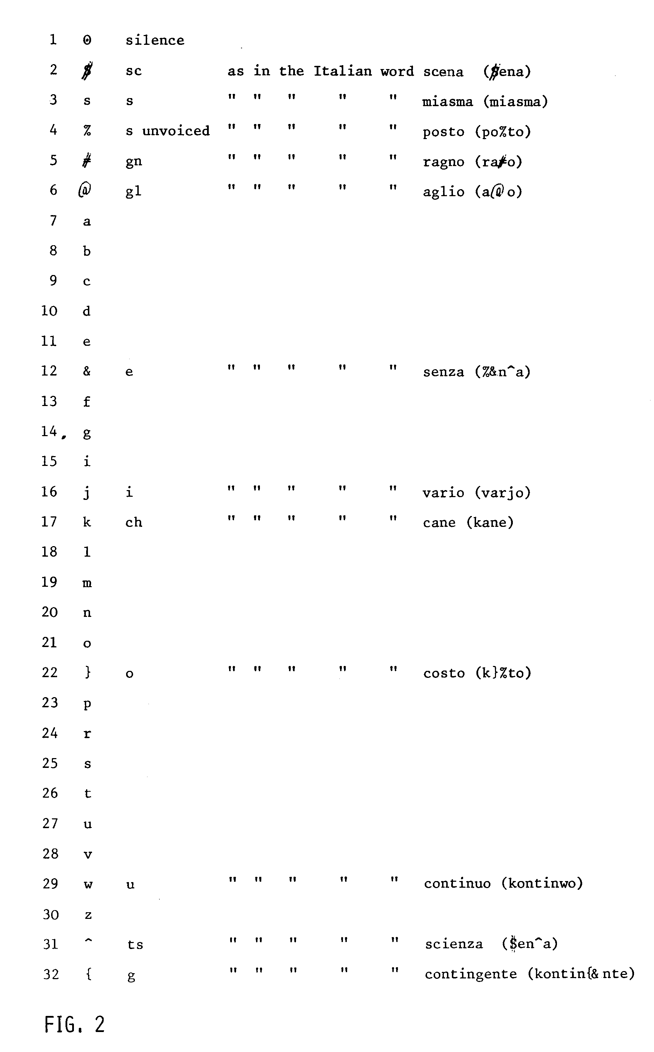

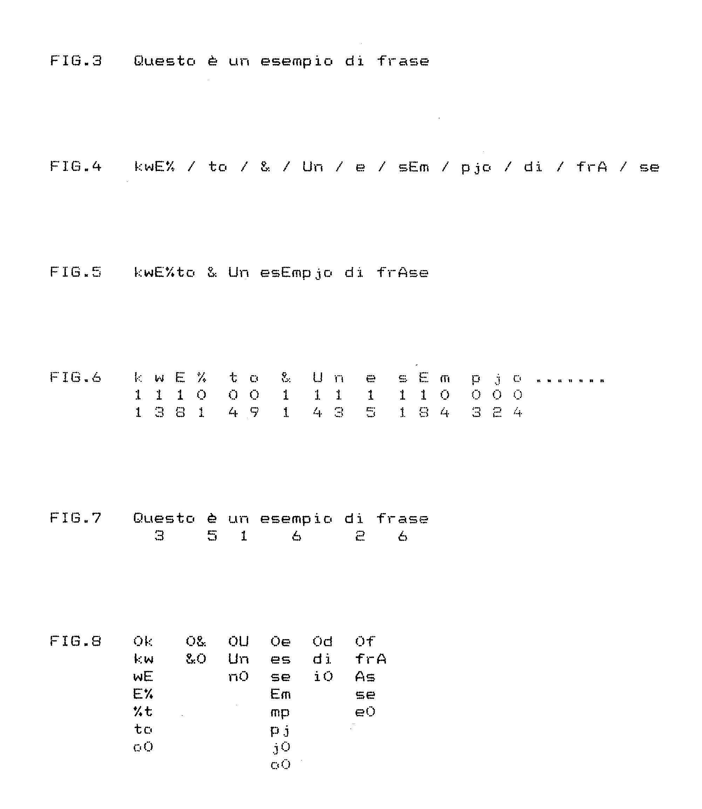

Briefly the Text Input 100 receives a graphemic string of characters. The Text Processor 101 translates the input graphemic string into a phonetic string using a phonetic alphabet and a set of rules, in order to have a one-to-one correspondence between the output phonetic symbols and the set of acoustic units used for synthesis (letter-to-sound rules). The Text Processor 101 includes stress positioning rules, phonotactic rules, syllabification rules, morpho-syntactical analysis and phonetic transcription rules. The Text Processor 101 incorporates most of the linguistic knowledge required by the system and is language dependent in its structure. A possible set of phonetic symbols for the Italian language is reported in FIG.2. The prior art discloses a variety of techniques for dealing with the letter-to-sound translation problem. A review of such

EP 0 515 709 A1

techniques for the Italian language can be found in the article entitled "Phonetic Transcription Rules for Text-to-Speech Synthesis of Italian", by P. L. Salza, in Phonetica, n.47, pp.66-83, 1990. A sample of an input text is reported in FIG.3 where the sentence 'Questo e' un esempio di frase' ('This is a sample sentence') is used as an example. FIG.4 reports the sentence divided into syllables; FIG.5 reports the phonetic transcription of the sentence used in the example. The string of phonetic symbols produced by the Text Processor 101 is sent to the Duration and Amplitude Processor 102, the Segmental Unit Processor 103 and the Prosodic Processor 104.

The Duration and Amplitude Processor 102 evaluates the proper duration and amplitude for each phonetic symbol to be synthesized. This module makes use of a syllable model and morpho-syntactical information in order to produce the desired output; it is based on a concept of intrinsic duration of the phoneme; each phoneme is considered differently according to its position in the syllable and with respect to the lexical stress; syllable models of this kind has been proposed in literature. In particular a collection of speech data has been previously examined to determine the correct amplitude and duration values given the syllabic position of the phonetic symbol in the word. Details on this technique can be found in the above cited article, entitled "Automatic Inference of a Syllabic Prosodic Model" by A. Falaschi et al. Intrinsic durations are then stretched accordingly to the Part Of Speech (POS) of the word in the sentence; algorithms to modify durations accordingly to the POS are reported in the book "From text to speech: The MITalk system", by J. Allen, M. S. Hunnicutt, D. Klatt, Cambridge University Press, 1987. Other kinds of processing may be used as well. The result of the processing is reported in FIG.6 where the phoneme sequence is depicted and each phoneme has associated the couple of indexes used to identify its syllabic position and, from that, the intrinsic duration, and in FIG.7 where the sequence of words and the corresponding POS are shown. Other procedures to compute energy may be used as well. The output of the Duration and Amplitude Processor 102 is sent to the Prosodic Processor 104, the Segmental Unit Linker 105 and the Synthesis Filter 106.

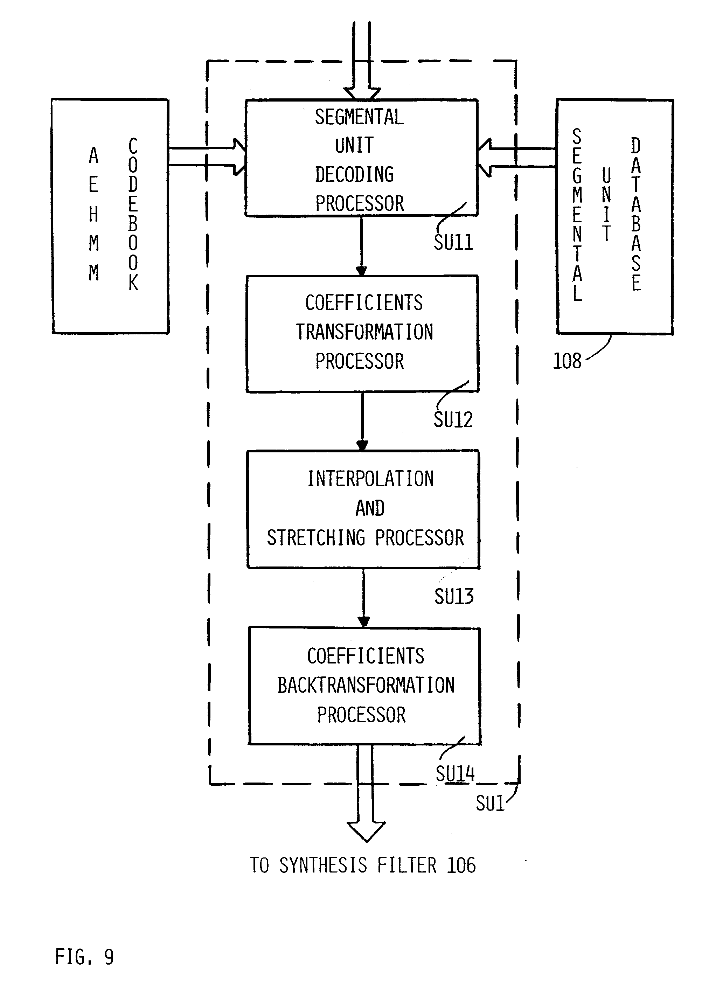

The Segmental Unit Processor 103 determines the sequence of segmental units corresponding to the elementary phonetic symbols. For each phonetic symbol $s_i$ in the input string the left $s_{i-1}$ and right $s_{i+1}$ phonetic contexts are determined. Assigned to the phonetic symbol is a couple of identifiers of the segmental unit set representing the coarticulation phenomena at the border of the left and right contexts : $F_{i-1,i} \equiv s_{i-1} \rightarrow s_i$ and $F_{i,i+1} \equiv s_i \rightarrow s_{i+1}$. The segmental unit identifiers are determined by searching in the Segmental Unit Database 108 until the transitions $s_{i-1} \rightarrow s_i$ and $s_i \rightarrow s_{i+1}$ are found. The output of the Segmental Unit Processor 103 is sent to the Segmental Unit Linker 105. In FIG.8 a sample of the input-output relationship of the Segmental Unit Processor 103 is given.

The Prosodic Processor 104 receives as input the phonetic string in order to create an intonative contour for the sentence to be synthesized. For each phoneme the period of the excitation function (pitch) is determined, accounting for the sentence level of the phrase (interrogative, affirmative,..), the importance of the word the phoneme belongs to (noun, verb, adjective,..), the stress positioning, the duration and the intonative contour continuity constraints. A sequence of pitch values to be used during the synthesis is obtained at the end of this phase. Such sequence is sent to the Synthesis Filter 106.

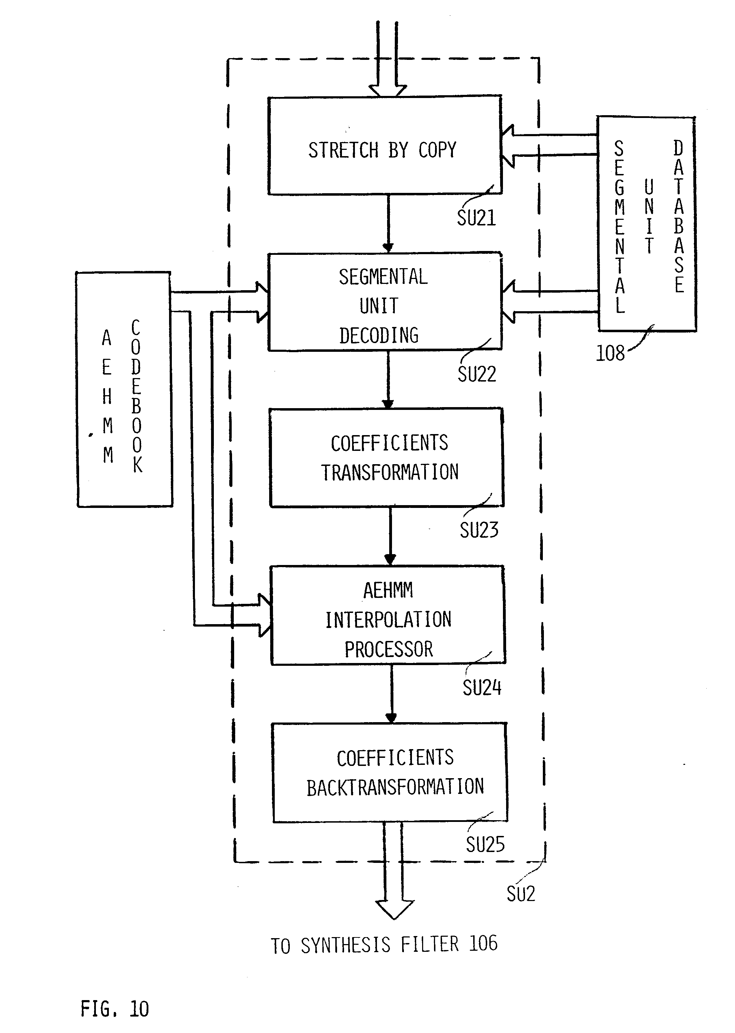

In accordance with the segmental unit string segmentation step and with the phonetic duration values produced by the Duration and Amplitude Processor 102, the set up of spectral parameters is initiated by the Segmental Unit Linker 105. Generally each segmental unit is stretched in order to reach the correct duration of the corresponding phonetic event and a suitable interpolation scheme is applied to prevent spectral and amplitude discontinuities at the segmental unit borders. The Segmental Unit Linker 105 is shown in two different implementations SU1 and SU2 in FIG.9 and FIG.10 respectively.

In the first implementation the segmental units are first decoded by the Segmental Unit Decoding Processor SU11, the task of which is to back-transform the AEHMM segmental unit representation into a sequence of feature vectors. The Segmental Unit Decoding Processor SU11 associates to each label the corresponding source model of AEHMM, as determined in the previous AEHMM training; this means that, in the present embodiment, associated to each label resulting from the segmental unit coding procedure is the vector of expected values of the source parameters. This is immediate using multivariate Gaussian distributions. In this case associated to each label is the mean of the Gaussian density distribution itself. Then the segmental units are stretched in order to reach the proper duration, using a suitable interpolation scheme. The interpolation stage is a crucial issue in the design of the speech synthesizer; the segmental unit representation should be chosen in order to allow such spectral interpolation, or, alternatively, proper transformations should be applied to the adopted representation before and after the application of the interpolation scheme. It is of course desirable that the features be linear with respect to the interpolation scheme. If prediction coefficients are used, it is preferred to transform them into more linear features such as, for instance, Log Area Ratios. The feature vector transformation of SU12 is indicated by $\Gamma (a_i)$, and gives

8

a different set of features vectors $l_i$ :

$$L \equiv \{l_i = \Gamma(\alpha_i)\}, 1 \leq i \leq P$$

Then the linear interpolation scheme of SU13 can be applied between feature vectors of neighbouring segmental units h and k, so that:

$$l_i = \alpha_{h,i} \times m + \alpha_{k,i} \times M\text{-}m, 1 \leq m \leq M$$

where M = length of the steady-state part of the bordering phoneme and h,k are respectively the identifiers of input and output segmental units. The result is then back-converted into a spectral representation suitable for the synthesis process, by the Coefficients Back-Trasformation Processor SU14.

In the proposed implementation, reflection coefficients are used :

$$K \equiv \{k_i = \Delta(l_i)\}, 1 \leq i \leq P$$

as described in the article entitled "Speech Analysis and Synthesis by Linear Prediction of the Speech Wave", by B. S. Atal and S. L. Hanauer, in The Journal of the Acoustic Society of America, Vol.50, N.2, pp. 637-855, Apr.1971. A sequence of spectral parameters to be sent to the Synthesis Filter 106 is obtained at the end of this phase.

In the second implementation of the Segmental Unit Linker 105 (SU2) of FIG.10, stretching is simply obtained by replicating border segments of neighbouring transitions in order to reach the correct duration in the Stretch by Copy module SU21.

This means that the border labels of neighbouring segments are simply repeated until the correct duration is reached. A sequence of labels to be sent to the AEHMM Segmental Unit Decoding module SU22 is obtained at the end of this phase. The structure and operation of the module SU22 is identical to that of module SU11. The following stage operates a transformation of the feature vectors into a representation domain that is more suitable for interpolation. The module SU23 contains a coefficients transformation procedure that should be regarded as identical to that illustrated for the module SU12. After that the AEHMM Interpolation Processor SU24 is invoked. It activates the computing to generate the actual features vector to be used in the Synthesis Filter 106. To this purpose a weighted mean of the transformed features vectors of the AEHMM Codebook is computed. The output features vector, for each frame to synthesize, is then computed by weighting each transformed feature vector of the codebook by its probability at time t,

$$u_{av}^t = \sum_{i=1}^{M} l_i \times prob(\pi_i^t)$$

where $prob(\pi_i^t)$ are the probabilities of each state as computed by the forward-backward algorithm, and $l_i$ are the associated features vectors of the codebook with size M, and $u_{av}^t$ is the resulting features vector sent to the Synthesis Filter 106. The result is then back-converted into a spectral representation suitable for the synthesis process by the module SU25, whose structure is similar to the module SU14.

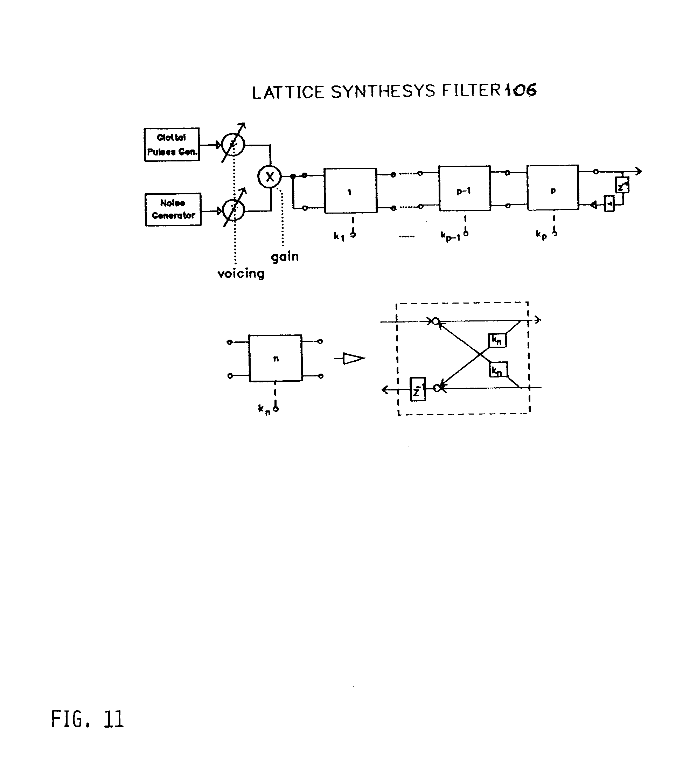

In accordance with the sequence of amplitude and spectral parameters and with the sequence of the pitch values, the synthetic speech is generated by the Synthesis Filter 106. For each segment to be synthesized the amplitude, pitch, and spectral parameters are taken from the input. Then speech synthesis algorithm is activated to obtain the segment of synthetic speech. Referring to FIG.11, the set of reflection coefficients $k_1,...,k_p$ feeds the boxes labelled as 1 ... p, the pitch parameter produced by the Prosodic Processor 104 feeds the voicing control, and the amplitude produced by the Duration and Amplitude Processor 102, multiplied by the normalised prediction error G,

$$G = \prod_{i=1}^{P} (1 - k_i^2), \quad 1 \leq i \leq P$$

where $k_i$ are the reflection coefficients, feeds the gain control.

OPERATION OF THE SYNTHESIZER

Once the Segmental Unit Database 108 and the Duration and Amplitude Database 107 have been built as thought in section "Generation of the Segmental Unit Set", the AEHMM parameters have been estimated as thought in section "AEHMM Parameter Estimation" and the segmental unit set has been coded as thought in section "AEHMM Coding of Segmental Unit Set", the whole text-to-speech synthesis process can be summarised as follows :

- the written text is inputted through the Text Input 100, and then processed by the Text Processor 101;
- the Duration and Amplitude Processor 102 assigns to each phoneme the proper duration and amplitude values by the Amplitude and Duration Database 107;
- the Segmental Unit Processor 103 determines the correct sequence of segmental units to be concatenated by searching in the Segmental Unit Database 108;
- the Prosodic Processor 104 determines a sequence of voicing parameters to be used as excitation function for the Synthesis Filter 106;
- the Segmental Unit Linker 105 physically gets segmental units from the Segmental Unit Database 108 and stretches the segmental units in order to get the correct duration for each phoneme by using suitable spectral and amplitude interpolation schemes. Then spectral coefficients are converted into a suitable representation for the Synthesis Filter 106;
- the spectral parameters calculated by the Segmental Unit Linker 105, together with the voicing parameters calculated by the Prosodic Processor 104 and the amplitude parameters calculated by the Duration and Amplitude Processor 102, are used by the Synthesis Filter 106 to Produce the synthetic speech output.

**Claims**

1. In a concatenative text-to-speech synthesis process a method for compactly representing a set of acoustic units using an Acoustic Ergodic Hidden Markov Model (AEHMM) reflecting phonotactical constraints of the language, the method comprising the steps of :
   a) building an AEHMM, considering as observation sequence the speech feature vectors extracted from the frames in which the speech uttered during the training is divided and as hidden sequence the sequence of the sources that most probably have emitted the speech utterance frames,
   b) initialising said AEHMM by a Vector Quantization clustering scheme, having the same size of said AEHMM,
   c) training said AEHMM by the forward-backward algorithm and Baum Welch re-estimation formulas,
   d) building a set of segmental units for speech synthesis and
   e) coding said segmental units using the labelling feature of said AEHMM.

2. A method according to claim 1 including the further step of decoding and linking the segmental units for the concatenative speech synthesis process using an optimality criterion.

3. A method according to claim 2, wherein said optimality criterion consists in an AEHMM decoding process wherein the determination of the speech feature vectors is obtained associating to each label the corresponding feature vector of said AEHMM.

4. A method according to claim 2, wherein said optimality criterion consists in the forward-backward algorithm and wherein the determination of speech feature vectors is obtained by weighting each feature vector of said AEHMM by the probability of the corresponding label.

5. A method according to claim 2, wherein said optimality criterion consists in the Viterbi algorithm and the determination of the speech feature vectors is obtained taking the feature vectors of said AEHMM corresponding to the most probable labels.

6. A concatenative text-to-speech synthesizer system including a Text Input means (100) for entering text to be synthesized, a Text Processor (101) for converting the graphemic input into a phonetic representation, a Duration and Amplitude Processor (102) for determining the phonetic duration and amplitude parameters, a Prosodic Processor (104) for determining prosodic contours for the speech utterance to be synthesized, a Segmental Unit Processor (103) for determining the sequence of segmental units to be concatenated, a Segmental Unit Linker (105) which links said segmental units determining filter coefficients and a Synthesis Filter (106) which, using said prosodic and energy contours and filter coefficients, synthesizes the speech to be generated characterized in that the synthesizer system includes a Segmental Unit Database (108) built by an Acoustic Ergodic Hidden Markov Model (AEHMM) coder and in that said Segmental Unit Linker (105) includes a Segmental Unit Decoding Processor (SU11) which translates the sequence of labels obtained from said Database (108) and corresponding to a segmental unit into a sequence of spectral feature vectors, a Coefficients Transformation Processor (SU12) changing the domain of representation of the spectral parameters into one suitable for the interpolation process, an Interpolation and Stretching Processor (SU13) for segmental units which produces the sequence of spectral feature vectors for said Synthesis Filter (106) and a Back-Transformation Processor (SU14) which transforms the domain of spectral coefficient representation in order to be directly used by said Synthesis Filter (106).

7. The text-to-speech synthesizer system of claim 6 in which said Segmental Unit Linker (105) includes a Stretch by Copy Processor (SU21) producing a sequence of labels with correct phonetic duration, a Segmental Unit Decoding Processor (SU22) translating the sequence of labels into a sequence of spectral feature vectors, a Coefficient Trasformation Processor (SU23) which changes the domain of representation of the spectral parameters into a one suitable for the interpolation process, an AEHMM Interpolation Processor (SU24) which uses an optimality criterion in order to produce the most probable sequence of feature vectors with respect to phonotactical constraints of the language and a Coefficients Back-Trasformation Processor (SU25) which trasforms the domain of spectral coefficient representation in order to be directly used by said Synthesis Filter (106).

8. The text-to speech synthesizer system of claim 7 wherein said optimality criterion used in said AEHMM Interpolation Processor (SU24) consists in computing the probability that each state of said AEHMM generates the said sequence of spectral parameters by the forward-backward algorithm and in which each feature vector is computed as a sum of the speech feature vectors associated to each state of said AEHMM, weighted by the probability of each state.

9. The text-to-speech synthesizer system of claim 7 in which said optimality criterion used in said AEHMM Interpolation Processor (SU24) consists in computing the probability that each state of said AEHMM generates said sequence of spectral parameters by the Viterbi algorithm and in which each feature vector is obtained as the speech feature vector associated to the most probable state of said AEHMM and assuming as speech feature vector the mean vector associated to the source model.

FIG. 1

| 1 | Ø | silence | | | | | | |
|---|---|---|---|---|---|---|---|---|
| 2 | ∮ | sc | as | in | the | Italian | word | scena (∮ena) |
| 3 | s | s | " | " | " | " | " | miasma (miasma) |
| 4 | % | s unvoiced | " | " | " | " | " | posto (po%to) |
| 5 | ≠ | gn | " | " | " | " | " | ragno (ra≠o) |
| 6 | @ | gl | " | " | " | " | " | aglio (a@o) |
| 7 | a | | | | | | | |
| 8 | b | | | | | | | |
| 9 | c | | | | | | | |
| 10 | d | | | | | | | |
| 11 | e | | | | | | | |
| 12 | & | e | " | " | " | " | " | senza (%&n^a) |
| 13 | f | | | | | | | |
| 14 | g | | | | | | | |
| 15 | i | | | | | | | |
| 16 | j | i | " | " | " | " | " | vario (varjo) |
| 17 | k | ch | " | " | " | " | " | cane (kane) |
| 18 | l | | | | | | | |
| 19 | m | | | | | | | |
| 20 | n | | | | | | | |
| 21 | o | | | | | | | |
| 22 | } | o | " | " | " | " | " | costo (k}%to) |
| 23 | p | | | | | | | |
| 24 | r | | | | | | | |
| 25 | s | | | | | | | |
| 26 | t | | | | | | | |
| 27 | u | | | | | | | |
| 28 | v | | | | | | | |
| 29 | w | u | " | " | " | " | " | continuo (kontinwo) |
| 30 | z | | | | | | | |
| 31 | ^ | ts | " | " | " | " | " | scienza (∮en^a) |
| 32 | { | g | " | " | " | " | " | contingente (kontin{&nte) |

FIG. 2

EP 0 515 709 A1

FIG.3    Questo è un esempio di frase

FIG.4    kwE% / to / & / Un / e / sEm / pjo / di / frA / se

FIG.5    kwE%to & Un esEmpjo di frAse

FIG.6    k w E %   t o   &   U n   e   s E m   p j o . . . . . . . .
         1 1 1 0   0 0   1   1 1   1   1 1 0   0 0 0
         1 3 8 1   4 9   1   4 3   5   1 8 4   3 2 4

FIG.7    Questo è un esempio di frase
           3    5  1      6       2    6

FIG.8    Ok    O&   OU   Oe   Od   Of
         kw    &O   Un   es   di   frA
         wE         nO   se   iO   As
         E%              Em        se
         %t              mp        eO
         to              pj
         oO              jO
                         oO

14

```
AEHMM CODEBOOK  ──►  SEGMENTAL
                     UNIT
                     DECODING
                     PROCESSOR
                     SU11
                            ◄──  SEGMENTAL UNIT DATABASE
                                 108

                     COEFFICIENTS
                     TRANSFORMATION
                     PROCESSOR
                     SU12

                     INTERPOLATION
                     AND
                     STRETCHING PROCESSOR
                     SU13

                     COEFFICIENTS
                     BACKTRANSFORMATION
                     PROCESSOR
                     SU14
                                 SU1
```

TO SYNTHESIS FILTER 106

FIG. 9

STRETCH BY COPY
SU21

SEGMENTAL UNIT DATABASE
108

SEGMENTAL
UNIT
DECODING
SU22

A E H M M CODEBOOK

COEFFICIENTS TRANSFORMATION
SU23

AEHMM
INTERPOLATION
PROCESSOR
SU24

COEFFICIENTS BACKTRANSFORMATION
SU25

SU2

TO SYNTHESIS FILTER 106

FIG. 10

## LATTICE SYNTHESYS FILTER 106

FIG. 11

17

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EUROSPEECH 89, EUROPEAN CONFERENCE ON SPEECH COMMUNICATION AND TECHNOLOGY, Paris, September 1989, vol. 2, pages 187-190; A. FALASCHI et al.: "A hidden Markov model approach to speech synthesis" | 1 | G 10 L 5/04 |
| A | AT & T TECHNICAL JOURNAL, vol. 65, no. 5, September-October 1986, pages 2-11, Short Hills, NJ, US; R.E. CROCHIERE et al.: "Speech processing: an evolving technology" <br> * Figure 2 * | 6 | |

**TECHNICAL FIELDS SEARCHED (Int. Cl.5)**

G 10 L 5/04

The present search report has been drawn up for all claims

| Place of search | Date of completion of the search | Examiner |
|---|---|---|
| THE HAGUE | 18-01-1992 | ARMSPACH J.F.A.M. |